Europäisches Patentamt

European Patent Office

Office européen des brevets

(11) Publication number: **0 138 194**
**B1**

(12) **EUROPEAN PATENT SPECIFICATION**

(45) Date of publication of patent specification: **09.11.88**

(51) Int. Cl.⁴: **B 32 B 27/08,** B 32 B 27/36, B 32 B 17/10

(21) Application number: **84112191.6**

(22) Date of filing: **11.10.84**

(54) Coextruded multi-layered articles.

(30) Priority: **14.10.83 US 542292**

(43) Date of publication of application:
**24.04.85 Bulletin 85/17**

(45) Publication of the grant of the patent:
**09.11.88 Bulletin 88/45**

(84) Designated Contracting States:
**AT BE CH DE FR GB IT LI NL SE**

(56) References cited:
**FR-A-2 208 783**
**FR-A-2 390 281**
**FR-A-2 409 857**
**US-A-3 565 985**
**US-A-3 762 988**

(73) Proprietor: **THE DOW CHEMICAL COMPANY**
**2030 Dow Center Abbott Road P.O. Box 1967**
**Midland, MI 48640 (US)**

(72) Inventor: **Im, Jang-Hi**
**5315 Stony Creek Drive**
**Midland Michigan 48640 (US)**
Inventor: **Shrum, William E.**
**527 S. East Street**
**St. Louis Michigan 48880 (US)**

(74) Representative: **Sternagel, Hans-Günther, Dr. et al**
**Patentanwälte Dr. Michael Hann Dr. H.-G. Sternagel Sander Aue 30**
**D-5060 Bergisch Gladbach 2 (DE)**

## Description

This invention relates to multi-layered coextruded materials and, in particular, to composite multi-layered materials containing carbonate polymers.

It has become highly desirable to employ thermoplastic materials in extruded sheet applications, and in particular, transparent sheet applications. For example, carbonate polymers derived from reactions of dihydroxyorganic compounds, particularly the dihydric phenols and carbonic acid derivatives such as phosgene, have found extensive commercial application because of their excellent physical properties. These thermoplastic polymers appear to be particularly suitable for the manufacture of molded and extruded articles, wherein impact strength, rigidity, toughness, heat resistance, transparency and excellent electrical properties are required.

Unfortunately, however, such thermoplastic polymers are scratch and mar sensitive. This scratch and mar sensitivity introduces notches to the carbonate polymer materials and adversely affects the physical properties of the molded or extruded articles, such as impact resistance. It has been found desirable to blend less expensive thermoplastics with the carbonate polymer materials, and molding or extruding the resulting composition. However, properties such as impact strength and transparency are often deleteriously affected.

It is desirable to prepare thermoplastic sheets wherein a plurality of components are arranged in laminar fashion to provide the desired good physical characteristics. Unfortunately, the laminated layers are not generally prepared using coextrusion techniques, and the products comprise layers that are individually relatively thick, or the number of layers is relatively small.

US—A—3,565,985, for example, is related to a process of preparing thin multi-layer, in particular iridescent films, and an apparatus for producing such films; the thickness of the films being less than 0.55 mm, typically.

In view of the deficiencies in the prior art, it would be highly desirable to produce an impact resistant, generally notch insensitive, multi-layer extruded article which can be employed in glazing and transparent sheet applications.

The present invention is an impact resistant laminated article in the form of an extruded sheet and having a multi-layered structure comprising, on the average, alternating layers of coextruded polymeric, thermoplastic materials wherein the number of layers is greater than or equal to 40, the thickness of the sheet is in the range of from 0.25 mm to 2.5 cm, and wherein one of said materials forming said alternating layers contains a carbonate polymer; and the alternating layers containing carbonate polymer are bound in an essentially contiguous relationship to adjacent layers of the other polymeric materials comprising said article, wherein said alternating layers are in the form of thin films, (i.e., laminar layers) each having a relatively sharply defined interface and are generally parallel to the major surface of said article; said article being comprised of from 35 to 90 percent by volume of said layers containing carbonate polymer.

The present invention is an improved multi-layered, highly impact resistant, generally notch insensitive, highly hydrolytically stable article comprising alternating layers of coextruded polymeric, resinous materials. The multi-layered articles exhibit increasing impact strengths as the thicknesses of the layers of resinous materials decrease for a sheet of a given total thickness. In addition, random scratches to the outermost layers of the article do not affect the impact resistance of said article to as great an extent as scratches of similar character on the surface of essentially pure, blended, or relatively thick-layered laminated thermoplastic materials.

The laminated articles of this invention allow the skilled artisan to prepare compositions which comprise lesser amounts of carbonate polymer and larger amounts of other thermoplastic polymer, and are suitably employed in most applications in which carbonate polymers and blends of carbonate polymer with various other thermoplastic polymers have previously been utilized. The articles of this invention can be transparent. Applications of particular interest for these carbonate polymer containing multi-layered articles are glazing applications such as for windows and signs, profiles and moldings, housings for electrical appliances, radio and television cabinets, automotive equipment including ornaments and business machine housings, and the like. Other uses include security glazing applications, and applications as in the production of shields, transportation vehicles overglazing, solar energy units such as in greenhouses and skylight units, and the like.

The carbonate polymers employed in the present invention are advantageously aromatic carbonate polymers such as trityl diol carbonates described in U.S. Patent Nos. 3,036,036; 3,036,037; 3,036,038 and 3,036,039; carbonate polymers of bis(ar - hydroxyphenyl)alkylidenes (often called bisphenol-A type diols) including their aromatically and aliphatically substituted derivatives such as disclosed in U.S. Patent Nos. 2,998,835; 3,028,365 and 3,334,154; and carbonate polymers derived from other aromatic diols such as described in U.S. Patent No. 3,169,121.

It is understood, of course, that the carbonate polymer may be derived from two or more different dihydric phenols, a copolymer of a dihydric phenol with a glycol, with a hydroxy or acid terminated polyester or with a dibasic acid in the event a carbonate copolymer or interpolymer rather than a homopolymer is desired. Also suitable for the practice of this invention are blends of any of the above carbonate polymers. Also included in the term "carbonate polymer" are the ester carbonate copolymers of the types described in U.S. Patent Nos. 3,169,121; 4,330,662 and 4,105,633. Of the aforementioned carbonate polymers, the carbonate polymers of bisphenol-A are preferred. Methods for preparing carbonate polymers for use in the practice of this invention are well known, for example, several suitable methods are disclosed in the aforementioned patents.

The multi-layered articles of this invention comprise alternating layers containing the aforementioned carbonate polymers and alternating layers which can comprise a wide variety of other thermoplastic materials. For example, it is desirable to employ those rubber-modified monovinylidene aromatic polymers as are described in U.S. Patent No. 4,243,764. Also especially preferred are the transparent rubber-containing resins of the type disclosed in U.S. Patent No. 3,880,783. Of the rubber-modified resins, the rubber-modified styrene/acrylonitrile resins, for example, styrene/acrylonitrile/butadiene resins, are most preferred. also desirable are the styrene/butadiene resins and the acrylonitrile/methacrylate/butadiene resins.

Suitable thermoplastic resins which can be employed in addition to the aforementioned carbonate polymers include copolymers of monovinylidene aromatic monomers and ethylenically unsaturated monomers. Representative monomers are of the type disclosed in the aforementioned U.S. Patent No. 4,243,764. Especially preferred copolymers include styrene/acrylonitrile, styrene/acrylic acid, styrene/α - methylstyrene/acrylic acid, and styrene/maleic anhydride.

Suitable thermoplastic resins can also include, for example, the polyolefins such as polyethylene, polypropylene and olefinic copolymers and blends. Also suitable are resins such as polymethyl methacrylate, polystyrene, polyvinyl chloride and polyvinylidene chloride.

As used herein, the term "lamination" or "laminated article" refers to two or more layers of different thermoplastic materials which are brought together under high pressure and/or temperature conditions and/or in the presence of adhesives in order to obtain adherence of the different layers to one another. Also, as used herein, the term "coextrusion" or "extruded sheets" refers to two or more different thermoplastic materials which are brought together from various extrusion means and are placed in contact with one another prior to their exit through an extrusion die to form a laminated article.

The thickness of the extruded sheet can vary. For purposes of this invention, the term "sheet" is used as defined in ASTM D-883 (i.e., a form of plastic in which the thickness is very small in proportion to length and width and in which the plastic is present as a continuous phase throughout, with or without filler). The thickness of the extruded sheets of this invention can vary depending upon the application which is desired. The thickness of extruded sheets typically vary from 10 mils (0.25 mm) to 1 inch (2.5 cm), preferably from 30 mils (0.76 mm) to 0.5 inch (1.3 cm), and most preferably from 40 mils (1 mm) to 0.25 inch (0.7 cm).

In the preparation of the carbonate polymer containing blend, a minor amount of at least one of the aforementioned other polymeric components are combined with a major amount of a carbonate polymer using conventional mixing techniques such as admixing granular or particulate polymeric components, and subsequent melt blending of the components. Alternatively, the blends can be prepared by heat plastifying the higher melting polymeric components, (i.e., the carbonate polymer and the copolymer) and then adding other desired components thereto either in granular or heat plastified form. Generally, the order of mixing the blend components is not particularly critical. It is understood that in another aspect of this invention the layer containing carbonate polymer can contain essentially carbonate polymer or a blend of carbonate polymers and no other thermoplastic polymer.

A condition for transparency of carbonate polymer containing blends such as those as are used in this invention is a substantial equality of the refractive indices of the polymer constituents. In order to obtain highly transparent blends, the copolymer additives most advantageously have a refractive index which differs by not more than about 0.01, preferably less than about 0.002 unit from that of carbonate polymer. A compound is defined as transparent for the purposes of this invention if a layer 50 mils (1.27 mm) in thickness exhibits a luminous transmittance (according to ASTM D-1003-61) of at least about 70 percent. A transmittance of greater than 80 percent is preferred. For glazing purposes, a transmittance of above about 85 is most preferred. In addition to high transmittance, it is also desirable for the blend to exhibit a low haze (i.e., exhibit high clarity). For glass-like clarity, a haze of about 5 percent or less (according to ASTM D-1003-61) is most desirable. For most glazing purposes, a haze of less than about 10 percent is preferred. As used herein, "transparent carbonate polymer compositions" means such a composition that exhibits a high luminous transmittance as well as a low haze.

In accordance with one aspect of the invention, in addition to the transparency of the other thermoplastic material, said material must be compatible with the carbonate polymer. That is, the carbonate polymer containing blend must, for the most part, exhibit the good physical properties which are exhibited by essentially pure carbonate polymer.

Especially preferred thermoplastic materials employed in preparing carbonate polymer containing transparent blends include those prepared from the polymerization of styrene and acrylonitrile such that said styrene/acrylonitrile (SAN) copolymer contains an amount of acrylonitrile (AN) such that said copolymer has a refractive index which very nearly matches that of the carbonate polymer, preferably within about 0.002 unit of that of carbonate polymer. For example, a preferred SAN copolymer of this aspect of the present invention comprises from 92 to 95 weight percent styrene, preferably from 94.2 to 94.6 percent styrene, most preferably from 94.4 percent styrene, and from 5 to 8 percent acrylonitrile, preferably from 5.4 to 5.8 percent acrylonitrile, most preferably 5.6. The SAN containing from 5 to 8 weight

3

percent content of AN has a refractive index of from 1.584 to 1.586. This preferred additive exhibits a refractive index which very nearly equals that of commercially available carbonate polymer, which exhibits a refractive index of 1.586.

Preferred transparent carbonate polymer/SAN blends contain from 75 to less than 100 weight percent of carbonate polymer. Such blends, when properly extruded, can maintain Rheometrics Dart impact strengths of at least 50 percent that of essentially pure carbonate polymer. The carbonate polymer/SAN blends provide laminar layers which exhibit improved flow properties, as might be expected, but they also exhibit impact resistances which are unusually high in view of the impact resistances of the blend components. In the most preferred embodiments (i.e., compositions comprising extruded layers of blends containing greater than 80, most preferably greater than 90 weight percent carbonate polymer) impact resistances of the blends are very nearly equal to that impact resistance exhibited by the carbonate polymer component.

Other preferred copolymers employed in preparing transparent carbonate polymer containing blends include those prepared from the polymerization of styrene and acrylic acid such that said styrene/acrylic acid (SAA) copolymer contains an amount of acrylic acid (AA) such that said copolymer has a refractive index which very nearly matches that of the carbonate polymer, preferably within about 0.002 unit of that of carbonate polymer. For example, a SAA of the present invention comprises from 1 to 8 weight percent of AA, preferably from 7 to 8 weight percent AA; and 92 to less than 100 weight percent styrene. Such a copolymer has a refractive index which nearly equals that of a commercially available carbonate polymer.

Carbonate polymer/SAA blends maintain good impact resistant properties (i.e., greater than about 50 percent of that of essentially pure carbonate polymer) in the range from 84 to 99 weight percent of carbonate polymer when properly extruded. The polycarbonate/SAA blends provide laminar layers which exhibit improved flow properties, as might be expected, but they also exhibit impact resistances which are unusually high in view of the impact resistances of the blend components. In the most preferred embodiments (i.e., compositions comprising extruded layers of blends containing greater than about 88 weight percent polycarbonate) impact resistances of the blends are very nearly equal to that impact resistance exhibited by the carbonate polymer component.

The number of layers comprising the multi-layered article can vary. Advantageously, the number of layers can range from 40 to 1500, although such numbers depend on the capability of the coextrusion devices which are employed. It is most desirable to prepare multi-layered sheets having a large number of layers. For example, sheets having a large number of layers can be prepared by stacking and molding the sheets of laminated materials through compression, heat and/or use of adhesives. In such instances, the number of layers comprising the multi-layered article is essentially unlimited.

The volume fraction of the resins comprising the multi-layered sheet can vary, depending upon factors such as ease of processability or desired impact resistance of the sheet. The volume fractions of the resins comprising the multi-layered sheets can also be dependent upon the type of thermoplastic resins employed. Most desirably, the amount of the layers containing carbonate polymer can range from 35 to 90, preferably from 40 to 80, percent based on the total volume of the sheet. Conversely, the amount of the layers containing the other thermoplastic(s) can range from 10 to 65, preferably from 20 to 60, percent based on the total volume of the sheet. It is understood that the aforementioned volume fractions do not include the sacrificial skins and integral skins, as are defined hereinafter.

Multi-layered articles of this invention are most advantageously prepared by employing a multi-layered coextrusion device as described in U.S. Patent Nos. 3,773,882 and 3,884,606. Such a device provides a method for preparing multi-layered, simultaneously extruded thermoplastic materials, each of which are of substantially uniform layer thicknesses. Preferably, a series of layer multiplying means as is described in U.S. Patent No. 3,759,647 is employed.

The "feedblock" of the coextrusion device receives streams of diverse thermoplastic resinous materials from a source such as a heat plastifying extruder. The streams of resinous materials are passed to a mechanical manipulating section within the feed-block which serves to rearrange the original streams into a multi-layered stream having the number of layers desired in the final article. If desired, however, this multi-layered stream is subsequently passed through a series of layer multiplying means, in order to further increase the number of layers comprising the final article. The multi-layered stream is then passed into an extrusion die which is so constructed and arranged that streamlined flow is maintained therein. Such an extrusion die is described in U.S. Patent No. 3,557,265. The resultant product is extruded and is a multi-layered article wherein each layer is generally parallel to the major surface thereof.

The configuration of the extrusion die can vary and can be such as to reduce the thicknesses and dimensions of each of the layers in the desired region of the extruded sheet. It is preferable that the thickness of the layers in the extrusion die be in the range from 0.05 μm to 1,000 μm. The precise degree of reduction in thickness of the layers delivered from the mechanical orienting section, the configuration of the die, and the amount of mechanical working of the sheet after extrusion are all factors which affect the thickness of the individual layers in the product.

It is most desirable that the carbonate polymer containing material comprises the outermost layers of the extruded sheet. However, for certain applications, it is desirable that the other thermoplastic resin comprises the outermost layers of the extruded sheet. It is also most desirable that the extruded sheet comprises alternating layers containing carbonate polymer and one thermoplastic resin, such that on the

4

average, carbonate polymer containing layers will be present every other layer within the multi-layered sheet. It is essential that the layers, for example, containing carbonate polymer be bound in an essentially contiguous relationship to the adjacent layers rather than dispersed or mixed within the other polymeric material(s). That is, it is necessary that the layers each exhibit a relatively sharply defined interface. Especially near the surface of the sheet, there must not be any mixing of layers. It is also possible to employ, for example, the carbonate polymer containing blend plus two other thermoplastic resins, such that on the average, carbonate polymer containing layers will be present every third layer within the multi-layered article. It is also possible to employ an adhesive material as a "layer" between each of the carbonate polymer containing layers and other thermoplastic resin layers.

The use of the term "on the average" is employed to account for the fact that the outermost layers of the multi-layered stream can become adjacent layers as said multi-layered stream is successively passed through the layer multiplying means.

Sacrificial skins can also be employed in order to increase the ease of processing the multi-layered articles of this invention and to protect surfaces from damage prior to use. Said skins can advantageously comprise polyolefins such as polypropylene and, preferably, polyethylene. Said skins are most advantageously from 1 to 10 mils (0.025 to 0.254 mm) thick. The sacrificial skins are applied to the extruded article by introducing to the main flow a stream of skin material at a position between the layer multiplying means and the extrusion die. It is possible to apply the skin melt in either of two ways. For example, the skin melt can be added to the top and bottom of the main flow, or the skin melt can encapsulated the main flow throughout the entire perimeter. After the sacrificial skin material is applied to the sheet, it becomes a part of the multi-layered sheet until it is peeled off.

It is also desirable to employ an integral skin material of dimensions similar to the sacrificial skin. Most preferably, the integral skin contains carbonate polymer. It is desirable to incorporate, for example, an ultra-violet stabilizer into the integral skin material. The integral skin is applied in much the same manner as is the sacrificial skin. In addition, the integral skin can be applied to the multi-layered stream after exiting the feedblock and prior to the passing of said stream through the layer multiplying means. This allows one to introduce a relatively thick layer of carbonate polymer or other thermoplastic material within the multi-layered article. It is also desirable to add an outermost integral skin after the extruded article has exited the layer multiplying means.

The laminated articles of this invention exhibit good physical properties. Impact properties of the multi-layered materials approach that of essentially pure carbonate polymer. Hydrolytic stability of the multi-layered materials is superior to that of essentially pure carbonate polymer materials. The impact resistance of the sheets of this invention both at ambient temperature and at very low temperatures is also quite high. In addition, the articles of this invention are less sensitive to random surface scratches than are essentially pure carbonate polymer materials. In addition, the optical properties of the articles of this invention are comparable to those of essentially pure carbonate polymer when transparent thermoplastic resins are employed. The good optical properties are observed even if the adjacent layers comprising the various transparent thermoplastic materials possess refractive indices which are different from one another. It is understood that the refractive indices of the thermoplastic materials comprising the adjacent layers can be essentially equal to one another.

In addition to the carbonate polymer and other thermoplastic resin components, it is also desirable to incorporate other additives into the article through said polymeric components. In this regard, such additives as stabilizers, lubricants, plasticizers, anti-oxidants, fire retardants, fillers, reinforcing fibers, pigments and the like can be employed in preparing the extruded sheets.

The following examples are intended to illustrate the invention and are not intended to limit the scope thereof.

Example 1

Employing an apparatus generally described in Figure 3 of each of U.S. Patent Nos. 3,773,882 and 3,759,647, a sheet is prepared having 194 layers and a final thickness of about 50 mils (1.27 mm). The transparent thermoplastic resins are a polycarbonate of bisphenol-A (designated PC) which is commercially available under the trade name Merlon M-40 by Mobay Chemical; and a styrene/acrylonitrile resin (designated as S/AN) having a 70/30 percent S/AN which is commercially available as Tyril® 867 B from The Dow Chemical Company. The number of layers of polycarbonate is 98 and the number of layers of styrene/acrylonitrile is 96 (i.e., the polycarbonate is the outermost layer and the original multi-layered stream has been doubled by a layer multiplying means). The amount of each of the thermoplastic resins is varied to yield sheets comprising various volume fractions of each of said resins. The sheet is extruded and has a sacrificial skin of polyethylene about 3 mils thick (0.076 mm) on each side of said sheet. For comparison purposes, extruded sheets of essentially pure polycarbonate and essentially pure styrene/acrylonitrile are prepared. Rheometrics Impact measurements are performed on each sheet at room temperature (i.e. 20°C) and at −40°C. Sacrificial skins are removed prior to Rheometrics Impact measurements. The sheets are all about 50 mils (1.27 mm) in thickness. The results are presented in Table I.

TABLE I

| Sample | Description (volume %) PC/SAN | Rheometrics impact strength inch-lbs[1] (Joules) | |
| --- | --- | --- | --- |
| | | 20°C | −40°C |
| C-1* | 0/100 | 0.4 (0.045) | 0.1 (0.01) |
| C-2* | 30/70 | 10 (1.13) | 17 (1.9) |
| 1 | 45/55 | 121 (13.67) | 101 (11.4) |
| 2 | 67/33 | 190 (21.5) | 182 (20.6) |
| C-3* | 100/0 | 240 (27) | 203 (22.9) |

*Not an example of the invention.
[1]Based on a sample normalized to 50 mils (1.27 mm) in thickness.

The data in Table I indicates that good impact strength is observed both at ambient temperatures and low temperatures for those samples which comprise relatively large amounts of styrene/acrylonitrile resin.

Example 2
Using techniques described in Example 1, a 776-layered sheet is prepared comprising 392 layers of the previously described polycarbonate and 384 layers of the previously described styrene/acrylonitrile resin (i.e., the polycarbonate is the outermost layer and the original multi-layered stream has been rearranged by 3 successive layer multiplying means). Various samples having thickness of about 50 mils (1.27 mm) are prepared, as in Example 1, and Rheometrics Impact measurements are performed on each sheet at room temperature. The results are presented in Table II.

TABLE II

| Sample | Description (volume percent PC/SAN) | Rheometrics impact strength inch-lbs[1] (Joules) |
| --- | --- | --- |
| C-1* | 0/100 | 0.4 (0.045) |
| 3 | 37/63 | 115 (13) |
| 4 | 50/50 | 150 (17) |
| 5 | 65/35 | 203 (22.9) |
| C-3* | 100/0 | 240 (27) |

*Not an example of the invention.
[1]Based on a sample normalized to 50 mils (1.27 mm) in thickness.

The data in Table II indicates that the multi-layered samples containing the styrene/acrylonitrile resin exhibit good impact strengths.

Example 3
The hydrolytic stability of various polycarbonate and styrene/acrylonitrile resin multi-layered sheets is compared to that of polycarbonate. Multi-layered sheets are prepared as described in Examples 1 and 2. A stress is applied to each sheet as the samples are immersed in a water bath at 80°C. Times to break each of the samples at the essentially constant stress are measured and the results are presented in Table III.

TABLE III

| Sample | Description (vol. % PC/SAN) | No. layers | Applied stress Kg/cm$^2$ | Time to break (days) |
|---|---|---|---|---|
| 6 | 60/40 | 194 | 158 | 15.5 |
| 7 | 68/32 | 776 | 171 | 17.4 |
| C-3* | 100/0 | — | 164 | 1.1 |

*Not an example of the invention.

The data in Table III indicates that the multi-layered samples exhibit greatly improved properties under comparable stress. This indicates the hydrolytic stability of the multi-layered samples is much improved over that of essentially pure polycarbonate.

Example 4

Using techniques described in Example 1, a 392-layered sheet is prepared about 35 mils (.089 mm) thick comprising 200 layers of the previously described polycarbonate and 192 layers of polymethylmethacrylate (designated as PMMA) which is sold commercially under the trade name Plexiglas V-052 by Rohm and Haas. The polycarbonate is the outermost layer and the original multi-layered stream has been rearranged by 3 successive layer multiplying means. Rheometrics Impact measurements are performed on said sheet at room temperature. The results are presented in Table IV.

TABLE IV

| Sample | Description (volume percent PC/PMMA) | Rheometrics impact strength inch-lbs[1] (Joules) |
|---|---|---|
| C-4* | 0/100 | 0.1 (0.01) |
| 8 | 60/40 | 102 (11.5) |
| C-5* | 100/0 | 169 (19.1) |

*Not an example of the invention.
[1]Based on a sample normalized to 35 mils (0.89 mm) in thickness.

The data in Table IV indicates the multi-layered sampled comprising polymethylmethacrylate exhibits good impact strength.

Example 5

Using techniques described in Example 1, a 392-layered sheet about 50 mils (1.27 mm) thick is prepared comprising 200 layers of the previously described polycarbonate and 192 layers of styrene/acrylonitrile. The sample is designated as Sample No. 9. The polycarbonate is the outermost layer and the original multi-layered stream has been rearranged by 3 successive layer multiplying means. Optical measurements, such as yellowness index (Y.I.), light transmission (Trans.) and haze, are performed on said sheet. The results are presented in Table V.

TABLE V

| Sample | Description (vol. % PC/SAN) | Optical properties | | |
|---|---|---|---|---|
| | | Y.I.[1] | Trans.[2] | Haze[2] |
| 9 | 60/40 | 2.0 | 89 | 1.5 |
| C-3* | 100/0 | 1.7 | 91 | 2.0 |

*Not an example of the invention.
[1]Measured per ASTM D-1925.
[2]Measured per ASTM D-1003.

# 0 138 194

The data in Table V indicates that the optical properties of the multi-layered sample are comparable to the polycarbonate sample of the same thickness.

Example 6

Using techniques described in Example 1, a 49-layered sheet is prepared comprising 25 layers of the previously described polycarbonate and 24 layers of the previously described styrene/acrylonitrile resin (i.e., the polycarbonate is the outermost layer). The sample is designated Sample No. 10. Similarly, a 97-layered sheet is prepared comprising 49 layers of the previously described polycarbonate and 48 layers of the previously described styrene/acrylonitrile resin (i.e., the polycarbonate is the outermost layer). The sample is designated as Sample No. 11.

Surface cracks are introduced to the 50 mil (1.27 mm) thick sheets in random directions using a sharp razor blade. Cracks are 0.25 (0.635 cm) inch wide and 8 mils (0.20 mm) deep. Rheometrics Impact tests are performed by hitting the sheet at the center of each crack but from directly behind the crack (i.e., from the side of the sheet opposite that of the crack). Results are presented in Table VI.

TABLE VI

| Sample | (Volume %) PC/resin | Rheometrics impact strength[1] inch-lbs (Joules) | |
| | | Cracked sample | Uncracked sample |
| --- | --- | --- | --- |
| 10 | 72/28 | 131 (14.8) | 140 (15.8) |
| 11 | 35/65 | 65 (7.3) | 100 (11.3) |
| C-3* | 100/0 | 53 (5.9) | 240 (27.1) |

*Not an example of the invention.
[1]Based on a sample normalized to 50 mils (1.27 mm) in thickness.

The data in Table VI indicates that the multi-layered samples exhibit good impact strengths even when subjected to random surface cracks. It is noted that a polycarbonate sample exhibits greatly reduced impact strength when subjected to random surface cracks.

Example 7

Integral skins of carbonate polymer are introduced to a multi-layered article comprising the previously described polycarbonate and the previously described styrene/acrylonitrile resin. A 776-layered sheet is prepared comprising 392 layers of polycarbonate and 384 layers of styrene/acrylonitrile as described in Example 2. Polycarbonate integral skins are applied in a manner similar to the application the polyethylene sacrificial outer skin layers. The total thickness of the sheet is 62 mils (1.57 mm). Results are presented in Table VII.

TABLE VII

| Sample | Description (vol. % PC/SAN) | Polycarbonate skin thickness | Rheometrics impact strength inch-lbs (Joules) |
| --- | --- | --- | --- |
| 12 | 72/28 | 0.10 mm | 277 (31.3) |

## Claims

1. A laminated article in the form of an extruded sheet having a multi-layered structure comprising, on the average, alternate layers of coextruded, thermoplastic materials, in which one of the thermoplastic materials forming the layers contains a carbonate polymer, the layers containing carbonate polymer are bound in a contiguous relationship to adjacent layers of thermoplastic material not containing carbonate polymer, said alternate layers are in the form of thin films each having a sharply defined interface and the films are parallel to the major surface of said article characterized in that the number of layers is ≥40, the thickness of the sheet is in the range of from 0.25 mm to 2.5 cm, and said article comprises from 35 to 90 percent by volume of said layers containing carbonate polymer.

2. The laminated article of Claim 1 wherein the number of said alternating layers ranges from 40 to 1500.

3. The laminated article of Claim 1 or 2 wherein said article is transparent.

4. The laminated article of Claim 1, 2 or 3, wherein the thickness of said sheet is from 0.76 mm to 1.3 cm.

5. The laminated article of any one of the preceding claims wherein the multi-layered structure comprises, on the average, alternating layers of two coextruded polymeric, thermoplastic materials wherein one of said polymeric materials is a carbonate polymer.

6. The laminated article of any one of the preceding claims wherein the thermoplastic material not containing carbonate polymer is selected from styrene/acrylonitrile copolymer, styrene/acrylic copolymer, polymethylmethacrylate or a rubber-modified styrene/acrylonitrile copolymer.

7. The laminated article of any one of the preceding claims wherein said article has applied to at least one outer surface thereof, a polyolefinic sacrificial skin layer.

8. The laminated article of any one of Claims 1 to 6 wherein said article has applied therein and to the major surfaces thereof, an integral skin.

9. The laminated article of Claim 8, wherein an ultra-violet stabilizer is incorporated into said integral skin.

10. The laminated article of any one of Claims 1 to 6, wherein the outermost layers of said multi-layered structure comprise a carbonate polymer.

11. The laminated article of any one of the preceding claims wherein said carbonate polymer is a homopolymer of bisphenol-A.

12. The laminated article of any one of Claims 1 to 9 wherein said layers containing carbonate polymer comprise a major amount of a carbonate polymer and a minor amount of at least one of another thermoplastic material.

13. The laminated article of any one of Claims 1 to 12, where additives selected from the group consisting of stabilizers, lubricants, plasticizers, anti-oxidants, fire retardants, fillers, reinforcing fibers and pigments are incorporated into said article through said thermoplastic material.

14. The laminated article of Claim 13 wherein said other thermoplastic material is a copolymer of styrene/acrylonitrile or styrene/acrylic acid.

15. The laminated article of any one of Claims 1 to 14, wherein said article comprises of from 40 to 80 percent by volume of layers containing polycarbonate polymer.

16. The laminated article of any one of the preceding claims wherein the refractive indices of said polymeric, thermoplastic materials are essentially equal to that of said carbonate polymer.

17. Use of the laminated article of any one of Claims 1 to 16 for applications in glazing.

**Patentansprüche**

1. Laminierter Gegenstand in Form einer extruierten Folie mit einem mehrschichtigen Aufbau, im Durchschnitt enthaltend abwechselnde Schichten coextruierten, thermoplastischen Materials, in denen eines des die Schichten bildenden thermoplastischen Materials ein Carbonatpolymer enthält, wobei die Carbonatpolymer enthaltenden Schichten an benachbarte Schichten aus thermoplastischem Material gebunden sind, welche kein Carbonatpolymer enthalten, und die abwechselnden Schichten in Form dünner Filme jeweils eine scharf definierte Grenzfläche aufweisen und die Filme parallel zu der Hauptfläche des Gegenstandes verlaufen, dadurch gekennzeichnet, daß die Zahl der Schichten ≥40 ist, die Dicke der Folie im Bereich vonm 0,25 mm bis 2,5 cm liegt und der Gegenstand von 35 bis 90 Volumen Prozent Carbonatpolymer enthaltende Schichten enthält.

2. Laminierter Gegenstand nach Anspruch 1, dadurch gekennzeichnet, daß die Zahl der abwechselnden Schichten im Bereich von 40 bis 1500 beträgt.

3. Laminierter Gegenstand nach Anspruch 1 oder 2, dadurch gekennzeichnet, daß der Gegenstand transparent ist.

4. Laminierter Gegenstand nach Anspruch 1, 2 oder 3, dadurch gekennzeichnet, daß die Dicke der Folie von 0,76 mm bis 1,3 cm beträgt.

5. Laminierter Gegenstand nach jedem der vorstehenden Ansprüche, dadurch gekennzeichnet, daß der mehrschichtige Aufbau im Druchschnitt abwechselnde Schichten von zwei coextruierten thermoplastischen Polymermaterialien enthält, von denen eines der Polymermaterialien ein Carbonatpolymer ist.

6. Laminierter Gegenstand nach jedem der vorstehenden Ansprüche, dadurch gekennzeichnet, daß das kein Carbonatpolymer enthaltende thermoplastische Material aus Styrol/Acrylnitrilcopolymer, Styrol/Acrylatcopolymer, Polymethylmethacrylat oder mit Kautschuk modifiziertem Styrol/Acrylnitrilcopolymer ausgewählt ist.

7. Laminierter Gegenstand nach jedem der vorstehenden Ansprüche, dadurch gekennzeichnet, daß auf mindestens einer Außenfläche des Gegenstandes eine abziehbare Schicht aus einem Polyolefin aufgebracht ist.

8. Laminierter Gegenstand nach jedem der Ansprüche 1 bis 6, dadurch gekennzeichnet, daß der Gegenstand in und auf seinen Hauptoberflächen eine integrierte Außenhaut aufweist.

9. Laminierter Gegenstand nach Anspruch 8, dadurch gekennzeichnet, daß in der Außenhaut ein Ultraviolettstabilisator vorhanden ist.

10. Laminierter Gegenstand nach jedem der Ansprüche 1 bis 6, dadurch gekennzeichnet, daß die äußersten Schichten des mehrschichtigen Aufbaus ein Carbonatpolymer enthalten.

11. Laminierter Gegenstand nach jedem der vorstehenden Ansprüche, dadurch gekennzeichnet, daß das Carbonatpolymer ein Homopolymer von Bisphenol-A ist.

12. Laminierter Gegenstand nach jedem der Ansprüche 1 bis 9, dadurch gekennzeichnet, daß die Carbonatpolymer enthaltenden Schichten einen Hauptanteil Carbonatpolymer und einen kleinen Anteil mindestens eines anderen thermoplastischen Materials enthalten.

13. Laminierter Gegenstand nach jedem der Ansprüche 1 bis 12, dadurch gekennzeichnet, daß Zusätze aus der Gruppe bestehend aus Stabilisatoren, Gleitmitteln, Weichmachern, Antioxidantien, flammenhemmenden Mitteln, Füllstoffen, verstärkenden Fasern und Pigmenten im thermoplastischen Material des Gegenstandes vorhanden sind.

14. Laminierter Gegenstand nach Anspruch 13, dadurch gekennzeichnet, daß das andere thermoplastiche Material ein Copolymer von Styrol/Acrylnitril oder Styrol/Acrylsäure ist.

15. Laminierter Gegenstand nach jedem der Ansprüche 1 bis 14, dadurch gekennzeichnet, daß der Gegenstand von 40 bis 80 Volumen Prozent Polycarbonatpolymer enthaltende Schichten enthält.

16. Laminierter Gegenstand nach jedem der vorstehenden Ansprüche, dadurch gekennzeichnet, daß die Brechnungsindices der thermoplastischen Polymermaterialien im wesentlichen gleich dem Brechungsindex des Carbonatpolymers sind.

17. Verwendung des laminierten Gegenstandes nach jedem der Ansprüche 1 bis 16 als Verglasung.

**Revendications**

1. Article stratifié se présentant sous forme d'une feuille extrudée présentant une structure multicouche constituée, en moyenne, de couches alternées de matériaux thermoplastiques coextrudés, dans lequel l'un des matériaux thermoplastiques formant les couches contient un polymère de carbonate; dans lequel les couches contenant le polymère de carbonate sont liées, dans une relation contiguë, aux couches adjacentes de matériaux thermoplastiques ne contenant pas de polymère de carbonate; dans lequel lesdites couches alternées se présentent sous forme de films fins ayant chacun une interface nettement définie; et dans lequel les films sont parallèles à la surface principale dudit article, caractérisé en ce que le nombre de couches est supérieur ou égal à 40; en ce que l'épaisseur de la feuille se situe sur la plage allant de 0,25 mm à 2,5 cm; et en ce que ledit article est constitué de 35 à 90 pour-cent en volume, desdites couches contenant le polymère de carbonate.

2. Article stratifié selon la revendication 1, dans lequel le nombre desdites couches alternées va de 40 à 1500.

3. Article stratifié selon la revendication 1 ou 2, dans lequel ledit article est transparent.

4. Article stratifié selon les revendications 1, 2 ou 3, dans lequel l'épaisseur de chaque feuille va de 0,76 mm à 1,3 cm.

5. Article stratifié selon l'une quelconque des revendications précédentes, dans lequel la structure multicouche est constituée, en moyenne, de couches alternées de deux matériaux thermoplastiques polymères coextrudés, dont l'un desdits matériaux polymères est un polymère de carbonate.

6. Article stratifié selon l'une quelconque des revendications précédentes dans lequel on choisit le matériau thermoplastique qui ne contient pas le polymère de carbonate parmi le copolymère styrène/acrylonitrile, le copolymère styrène/acrylique, le copolymère polyméthylméthacrylate ou styrène modifié par le caoutchouc/acrylonitrile.

7. Article stratifié selon l'une quelconque des revendications précédentes dans lequel on applique audit article, sur au moins l'une de ses surfaces extérieures, une couche polyoléfinique formant peau perdue.

8. Article stratifié selon l'une quelconque des revendications 1 à 6 dans lequel on applique audit article et à ses surfaces principales, une peau solidaire.

9. Article stratifié selon la revendication 8, dans lequel on incorpore dans ladite peau solidaire un produit stabilisant à l'égard des rayons ultraviolets.

10. Article stratifié selon l'une quelconque des revendications 1 à 6, dans lequel les couches les plus extérieures de ladite structure multicouche sont constituées d'un polymère de carbonate.

11. Article stratifié selon l'une quelconque des revendications précédentes dans lequel ledit polymère de carbonate est un copolymère de bisphénol-A.

12. Article stratifié selon l'une quelconque des revendications 1 à 9, dans lequel lesdites couches contenant un polymère de carbonate sont constituées d'une proportion importante de polymère de carbonate et d'une faible proportion d'au moins l'un des autres matériaux thermoplastiques.

13. Article stratifié selon l'une quelconque des revendications 1 à 12, dans lequel on incorpore audit article, par l'intermédiaire dudit matériau thermoplastique, des additifs choisis parmi le groupe constitué de stabilisants, de lubrifiants, de plastifiants, d'anti-oxydants, de retardateurs de feu, de charges, de fibres de renforcement et de pigments.

14. Article stratifié selon la revendication 13, dans lequel ledit autre matériau thermoplastique est un copolymère de styrène/acrylonitrile ou de styrène/acide acrylique.

15. Article stratifié selon l'une quelconque des revendications 1 à 14, dans lequel ledit article est constitué de 40 à 80 pour cent en volume de couches contenant du polymère de polycarbonate.

16. Article stratifié selon l'une quelconque des revendications précédentes dans lequel les indices de réfraction desdits matériaux thermoplastiques polymères sont essentiellement égaux à ceux dudit polymère de carbonate.

17. Emploi de l'article stratifié selon l'une quelconque des revendications 1 à 16 pour applications à effet d'émaillage brillant.